# EUROPEAN PATENT APPLICATION

(11) **EP 2 687 400 A2**
(43) Date of publication of application: **22.01.2014**
(21) Application number: 13003601.5
(22) Date of filing: 17.07.2013
(51) Int. Cl.: B60N 2/26

(54) **Improved tether strap arrangement**

(30) Priority: 17.07.2012 AU 2012903051
(71) Applicant: Britax Childcare Pty Ltd., Sunshine, VIC 3020 (AU)
(72) Inventor: Lumley, Mike, Sunshine, Victoria 3020 (AU); Purchas, Mark, Sunshine, Victoria 3020 (AU); Beaumont, Andrew, Sunshine, Victoria 3020 (AU)
(74) Representative: Bosch, Matthias

(57) **Abstract**

The present invention relates to a child restraint comprising a body, a safety harness including at least one shoulder strap for securing an occupant to the body, and link means operative to create a load path which substantially bypasses the body and transfers loads borne by the shoulder strap to a tethering means for tethering the child restraint with respect to an anchor point.

## Description

### PRIORITY DOCUMENTS

The present application claims priority from:
Australian Provisional Patent Application No. 2012903051 titled "IMPROVED TETHER STRAP ARRANGEMENT" and filed on 17 July 2012.
The content of this application is hereby incorporated by reference in its entirety.

### TECHNICAL FIELD

The present invention relates to a child restraint for use in a vehicle.

### BACKGROUND

Child restraints have been developed to improve the safety of children traveling in vehicles. A variety of different types of child restraints have been developed for this purpose, with most child restraints consisting of a seat or chair which is supported on a rear seat of a vehicle, for receiving the child therein.There exist a variety of types of child safety seats that are approved for use with children of a variety of ages and/or sizes.

Type A seats typically refer to rear facing seats or capsules suitable for accommodating babies/infants up to around 6 months of age and/or 70 cm in length and up to 12 kg.

Type B seats typically refer to forward facing seats used to accommodate toddlers and young children from approximately 6 months to 4 years, or from 8 - 18 kg.

Type E seats typically refer to boosted seats and booster cushions used to accommodate children between 4 - 8 years old, or approximately from 14 - 32 kg, and which are typically used in c combination with the vehicle seat belt.

Some seats may be a combination type AB or B/E to accommodate a child as the child grows thereby avoiding the need to purchase, or otherwise source, a variety of different seats to accommodate a growing child.

In many child safety seats, the child is restrained in the safety seat by a harness connected to a body or shell of the safety seat. The seat shell itself is typically connected to the vehicle by means of the vehicle seat belt and a tether strap connected to the shell and extending to a vehicle anchorage point, where the tether strap is attached thereto using a latching hook connector.

However, the shell of a child safety seat may flex more than desired in the event of an accident, thereby compromising the safety of the occupant by permitting excursion of the occupant's head from within the protective confines of the child safety seat.

It is against this background that the problems and difficulties associated therewith that the present invention has been developed.

Other objects and advantages of the present invention will become apparent from the following description, taken in connection with the accompanying drawings, wherein, by way of illustration and example, an embodiment of the present invention is disclosed.

### SUMMARY

According to a first aspect, there is provided a child restraint comprising a body, a safety harness including at least one shoulder strap for securing an occupant to the body, and a link means operative to create a load path which substantially bypasses the body and transfers loads borne by the or each shoulder strap to a tethering means for anchoring the child restraint with respect to an anchor point.

In one form, the safety harness comprises a pair of shoulder straps, and the link means is operative to transfer loads borne by both shoulder straps to the tethering means.

In one form, in an alternative, the safety harness comprises a pair of shoulder straps, and there is for each shoulder strap a link means operative to transfer loads borne by the respective shoulder strap to the tethering means. This is particularly applicable where the tether strap is a split tether strap.

In one form, the link means comprises a reinforcement means operative to reinforce the body of the child restraint.

In one form, the link means comprises a structural element.

In one form, the body is a seat body. In an alternative, the body is an infant capsule body.

In one form, the body comprises a base portion and a seat back portion, and the link means is associated with seat back portion.

In one form, the link means comprises an elongate structural element which extends transversely across at least a portion of the seat back portion of the body.

In one form, the structural element comprises a rod or bar. In an alternative, the rod is a plate, or a beam of any suitable cross-sectional shape, where this cross-sectional shape can vary lengthwise along the beam if required.

In one form, the tethering element attaches with respect to the structural element, and the or each shoulder strap at least extends over the structural element.

In one form, the link means comprises attachment means operative to attach the tethering means to the structural element.

In one form, the tethering means comprises a tether strap.

In one form, the tether strap is a split tether strap.

In one form, the body is molded from an engineering plastic.

According to a further aspect, there is provided a child restraint comprising a body, a safety harness including at least one shoulder strap for securing an occupant to the body, a tethering means for tethering the child restraint with respect to an anchor point, and a link means operative to create a load path which substantially bypasses the body and transfers loads borne by the shoulder strap to the tethering means.

In one form, the tethering means is a tether strap further comprising a connecting component to connect to the vehicle anchorage point.

In one form, the tether strap is a split tether strap.

In a further aspect the invention may be said to reside in a child safety seat comprising a seat body including a reinforcing element therefore, and a tethering means for tethering the child safety seat with respect to an anchorage point in the motor vehicle, said tethering means being secured to the seat body via the reinforcing element.

In a further aspect the invention may be said to reside in a child safety seat comprising a seat body including a reinforcing element providing an attachment point for means for tethering the child safety seat with respect to an anchorage point in the motor vehicle.

### BRIEF DESCRIPTION OF DRAWINGS

Embodiments of the present invention will be discussed with reference to the accompanying drawings wherein:

For a better understanding of this disclosure it will now be described with respect to an exemplary embodiment which shall be described herein with the assistance of drawings wherein:

Figure 1 is a front elevation of a child safety seat in accordance with a first embodiment of the invention;

Figure 2 is a rear elevation of the child safety seat of Figure 1;

Figure 3 is a rear elevation of a child safety seat in accordance with a second embodiment of the invention;

Figure 4 is a rear elevation of a child safety seat in accordance with a third embodiment of the invention;

Figures 5A and 5B illustrate a link means for a child safety seat in accordance with a further embodiment of the invention;

Figure 6 is a perspective view of link means for a child safety seat in accordance with yet a further embodiment of the invention;

Figure 7 is a perspective view of link means for a child safety seat in accordance with a further embodiment of the invention;

Figure 8 is a side elevation of the link means of Figure 7; and

Figure 9 is a side elevation of link means for a child safety seat in accordance with a further embodiment of the invention. In the following description, like reference characters designate like or corresponding parts throughout the several views of the drawings.

### DESCRIPTION OF EMBODIMENTS

The present invention will be described below in relation to a Type-B and/or E child safety seat 10 for use in a vehicle in a forward facing manner. However, it will be appreciated that the present invention could be equally applicable for use in a variety of different modes of child safety seats, including Type A/B, Type A/B/E etc., and still fall within the spirit of the present invention.

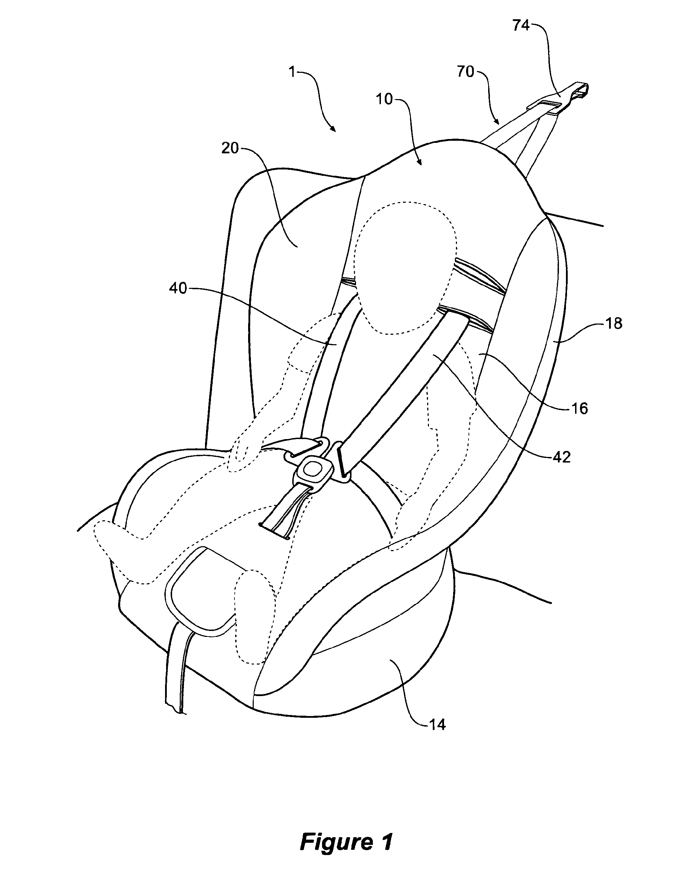

Referring now to Figure 1, where there is illustrated a child restraint, which in this case is a child safety seat 1 comprising a body 10 comprising a seat base portion 14, seat back portion 16 and side walls 18 and 20.

The body 10 is moulded, such as by injection moulding, of an engineering plastic material such as polypropylene.

The seat base portion 14 and seat back portion 16 can be integrally formed, or separately formed and assembled to form the body 10.

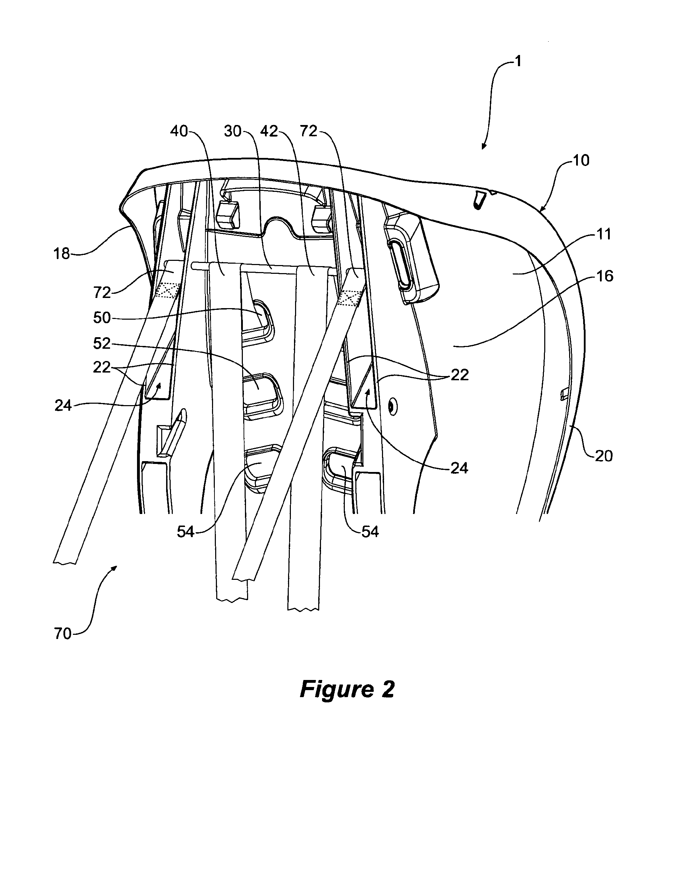

Referring now to Figure 2, the body 10 comprises two structural forms, in the form of two pairs of ribs 22, extending from a rear of the seat back portion 16 so as to define between them a pair of spaced apart channels 24.

A reinforcing structural element in the form of a steel bar 30 extends laterally across the seat back portion 16, passing through the two pairs of ribs 22 and the channels 24 as it does so. More specifically, the steel bar 30 has been moulded into the ribs 22.

The child safety seat 1 comprises a harness for a child occupant, consisting of a pair of shoulder straps 40 and 42, a pair of lap straps and a crotch strap. The straps are interconnected by a buckle. The seat back portion 16 has three sets of slots 50, 52 and 54 to provide alternative positions for attaching the shoulder straps 40 and 42. Behind the seat back 16, the shoulder straps 40 and 42 extend over reinforcing bar 30 and partway down the rear of the seat back portion 16 before being connected to a yoke which is in turn connected to an adjuster strap extending to a strap adjuster mounted on the seat body 10 below the front edge of the seat portion 14.

In an alternate embodiment (not illustrated), the shoulder straps provide loops through which a vehicle lap belt may pass so that the shoulder straps and lap belt work cooperatively to restrain the seat occupant.

Passing the shoulder straps 40 and 42 over the reinforcing bar 30 allows for an additional length of shoulder straps 40 and 42 for length adjustment thereof to suit both the smallest and largest possible occupants. In cases where such adjustability is not required, the shoulder straps 40 and 42 may connect directly to (such as by looping around) reinforcing bar 30.

The child safety seat 1 further comprises a 'split' tether strap 70 which is connected directly via opposing looped ends 72 thereof to the reinforcing bar 30 at locations in the channels 24, and connected to a vehicle anchorage point through a latching hook connector 74 disposed on the strap 70. The length of the tether strap 70 can be adjusted via an adjustable buckle, to suit different vehicles. See PCT/AU2005/000820, the full content of which should be considered incorporated herein by way of reference, for a full discussion of split tether straps.

In use, any load borne by the shoulder straps 40 and 42 as a result of vehicle deceleration, acceleration or accident, is transferred via a load path which extends via the steel bar 30 and the tether strap 70 to the vehicle anchorage point, with relatively little to no load being borne by the body 10 of the child safety seat 1, which has been bypassed.

The following Figures illustrate additional embodiments of the invention. Since most of the parts of the seat shown in the following Figures are identical to corresponding parts shown in the seat shown in Figure 1, they are denoted by the same reference numerals and will not be described again in detail.

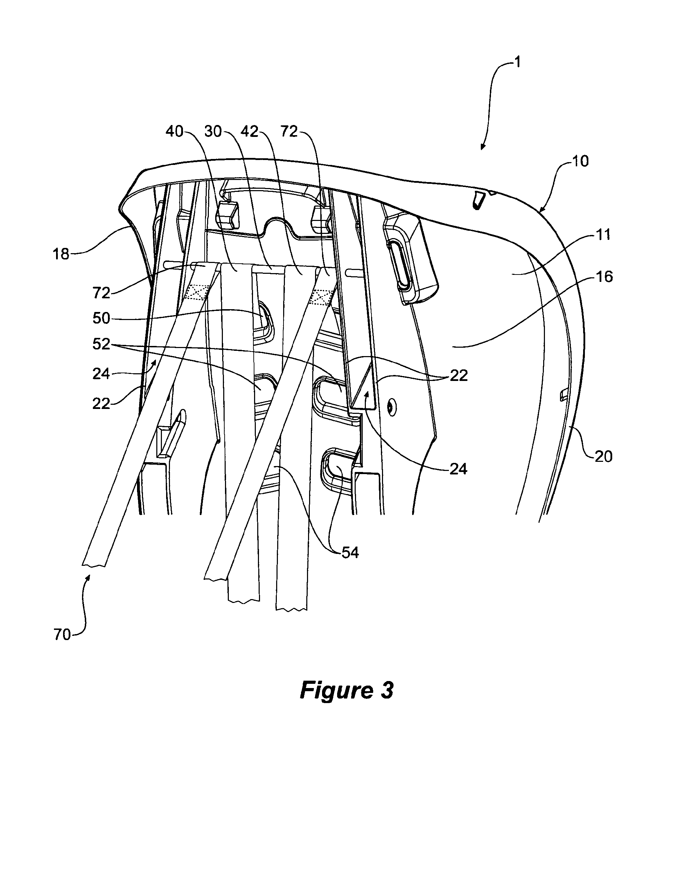

In Figure 3, the 'split' tether strap 70 is connected via looped ends 72 thereof to the reinforcing bar 30 at locations to the outside of the shoulder straps 40 and 42 but inside of the channels 24. This closer proximity will reduce bending moments in steel bar 30.

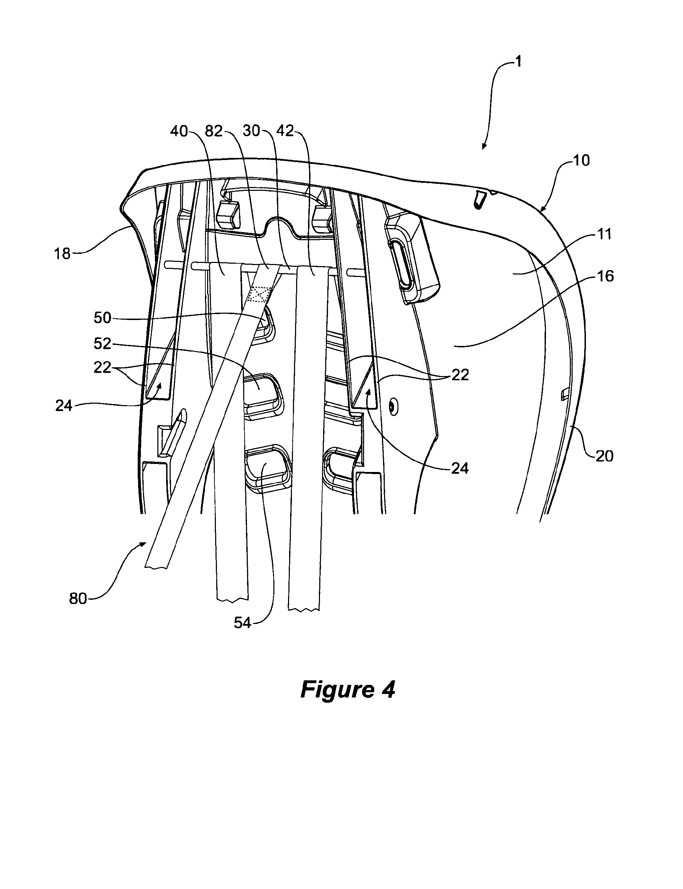

In Figure 4, a single tether strap 80 is connected directly via single looped end 82 thereof to the reinforcing bar 30 at a location between the shoulder straps 40 and 42. A further end of the tether strap 80 carries a latching hook connector for attachment to the vehicle anchorage point.

In contrast to the three above described embodiments of the present invention, some known child safety seats restrain the occupant using a harness attached to a seat body or shell which is in turn restrained by a seat belt or other restraining mechanism (such as straps or rigid connectors connected to ISOfix anchorages in the vehicle). Tether straps which attach to the seat shell are then used to limit the rotation of the top of the seat caused by the occupant loading the harness and the top part of the seat. However, a problem with these known seats is that in a crash there is a distortion of the plastic shell in the region between the tether strap attachment point(s) and the slots where the occupant harness straps pass through the shell of the child restraint. This distortion due to the occupant load in a frontal crash leads to a greater head excursion of the occupant.

In the three above described embodiments of the present invention however, loads associated with securing the child in the seat are transferred (substantially) directly from the harness straps 40 and 42 to the tethering means (i.e. tether strap 70 in one case and 80 in the other) by link means in the form of the tethering means attaching directly to reinforcing bar 30, said link means thereby also comprising reinforcement means.

An important advantage of the above described embodiments of the present invention then is that loads associated with securing the child in the seat are transferred to the vehicle anchor point without loading components (such as the seat shell 11) which might contribute to head excursion. This reduces shell 11 distortion and occupant head excursion from the protective confines of the seat shell 11, increasing the safety of the occupant. An added, albeit secondary advantage is that seat shell 11 requires less inherent strength, meaning this can be lightened.

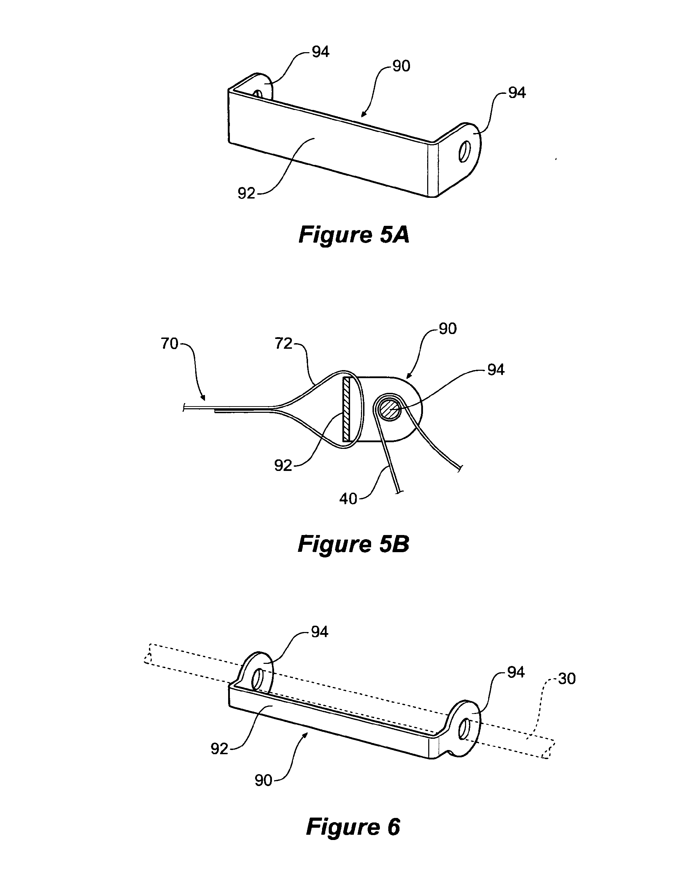

Referring now to Figures 5A, 5B and 6, where the tethering means once again takes the form of a split tether strap 70 (although a single tether strap 80 can be used), where each of the looped ends 72 thereof is disposed on a body 92 of a link element 90 in the form of a bracket, which in turn is disposed upon the reinforcing bar 30.

In addition to a body 92, each link element 90 comprises a pair of ends 94, each of which (i.e. the ends 94) comprises a through hole so that each end 94 can be disposed on the reinforcing bar 30 in such a way that each link element 90 straddles a shoulder strap 40 and 42 of the harness. Alternatively, both shoulder straps 40 and 42 may be attached to the reinforcing bar 30 by a common link element 90 (i.e. bracket) that straddles both straps.

In the embodiments of Figures 5A, 5B and 6, each link element 90 has been manufactured by pressing a steel blank and then bending the ends 94 through 90° relative to the body 92.

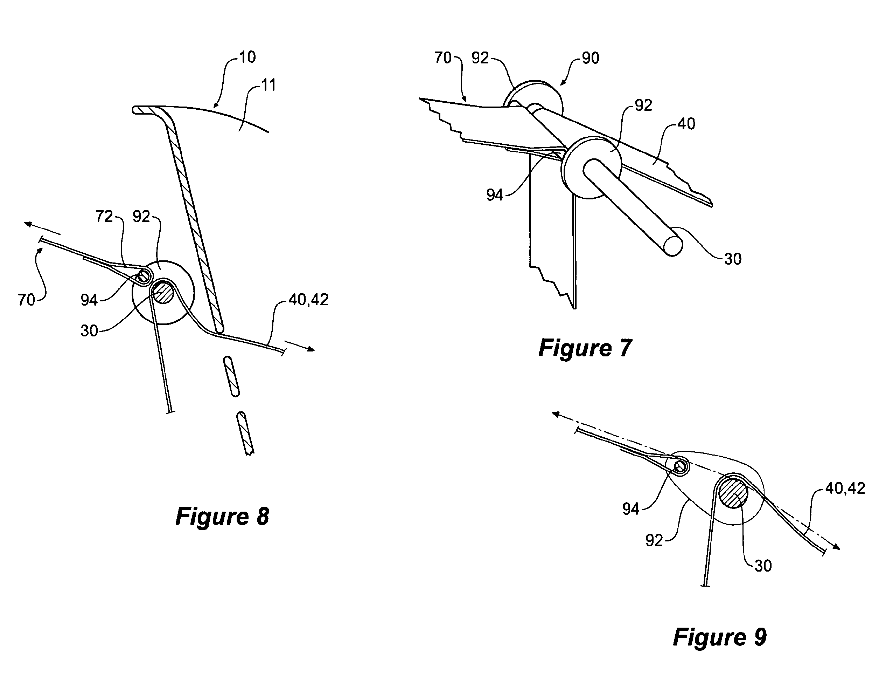

Referring now to Figures 7 through 9, where each link element 90 comprises a body 92 of steel bar welded to pressed steel ends 94.

In the embodiments described above and illustrated in Figures 5A, 5B and 6, loads associated with securing the child safety seat 1 are transferred directly from the harness straps 40 and 42 to the tethering means (i.e. tether strap 70) by link means comprising attachment means in the form of the link elements 90 attached to the reinforcing bar 30.

An additional advantage of these embodiments (i.e. as described above and illustrated in Figures 4 through 8), is that each of the looped ends 72 of the split tether strap 70 is aligned (not offset) with one of the harness straps 40 and 42 so that the line of action of force transferred from each harness strap 40 and 42 to the respective looped ends 72 of the split tether strap 70, is a direct one, eliminating side loads and reducing bending moments in the reinforcing bar 30.

Yet a further advantage of the embodiments described above and illustrated in Figures 5A through 9 , is that the bending strength of the reinforcing bar 30 can be controlled to allow a degree of bending that will absorb energy with minimal associated head excursion.

The reference to any prior art in this specification is not, and should not be taken as, an acknowledgement of any form of suggestion that such prior art forms part of the common general knowledge.

It will be appreciated by those skilled in the art that the invention is not restricted in its use to the particular application described. Neither is the present invention restricted in its preferred embodiment with regard to the particular elements and/or features described or depicted herein. It will be appreciated that various modifications can be made without departing from the principles of the invention. Therefore, the invention should be understood to include all such modifications in its scope.

## Claims

1. A child restraint comprising a body, a safety harness including at least one shoulder strap for securing an occupant to the body, and a link means operative to create a load path which substantially bypasses the body and transfers loads borne by the or each shoulder strap to a tethering means for anchoring the child restraint with respect to an anchor point.

2. The child restraint of claim 1, wherein the safety harness comprises a pair of shoulder straps, and the link means is operative to transfer loads borne by both shoulder straps to the tethering means.

3. The child restraint as in either of the preceding claims, wherein the link means comprises a reinforcement means operative to reinforce the body of the child restraint.

4. The child restraint as in any one of the preceding claims, wherein the link means comprises a structural element.

5. The child restraint as in any one of the preceding claims, wherein the body is a seat body.

6. The child restraint of claim 5, wherein the body comprises a base portion and a seat back portion, and where the link means is associated with seat back portion.

7. The child restraint of claim 6, wherein the link means comprises an elongate structural element which extends transversely across at least a portion of the seat back portion of the body.

8. The child restraint as in any one claims 4 through 7, wherein the structural element comprises a rod or bar.

9. The child restraint as in any one claims 4 through 8, wherein the tethering element attaches with respect to the structural element, and the or each shoulder strap at least extends over the structural element.

10. The child restraint of claim 9, wherein the link means comprises attachment means operative to attach the tethering means to the structural element.

11. The child restraint of claim 10, wherein the attachment means is adapted to align the or each shoulder strap with the tethering means so that the line of action of force transferred from the shoulder strap to the tethering means is a substantially direct one.

12. The child restraint, wherein the tethering means comprises a tether strap.

13. The child restraint of claim 11, wherein the tether strap is a split tether strap.

14. The child restraint as in any one of the preceding claims, wherein the body is molded from an engineering plastic.

15. A child restraint comprising a body, a safety harness including at least one shoulder strap for securing an occupant to the body, a tethering means for tethering the child restraint with respect to an anchor point, and a link means operative to create a load path which substantially bypasses the body and transfers loads borne by the shoulder strap to the tethering means.
